# EUROPÄISCHE PATENTSCHRIFT

(11) **EP 3 798 079 B1**
(45) Veröffentlichungstag und Bekanntmachung des Hinweises auf die Patenterteilung: **06.11.2024**
(21) Anmeldenummer: 20199074.4
(22) Anmeldetag: 29.09.2020
(51) Int. Cl.: B61D 17/04, B61D 17/08, B33Y 80/00

(54) **WAGENKASTENELEMENT FÜR EINEN WAGENKASTEN**
CAR BODY ELEMENT FOR A CAR BODY
ÉLÉMENT DE CAISSE POUR UNE CAISSE

(30) Priorität: 30.09.2019 DE 102019126366
(43) Veröffentlichungstag der Anmeldung: 31.03.2021
(73) Patentinhaber: ALSTOM Holdings, 93400 Saint-Ouen-sur-Seine (FR)
(72) Erfinder: Uschmann, Sven, 39104 Magdeburg (DE); Seidler, Hendrik, 16562 Hohen Neuendorf (DE); Prockat, Jan, 12559 Berlin (DE)
(74) Vertreter: Zimmermann & Partner Patentanwälte mbB

(56) Entgegenhaltungen:
- EP-A1- 1 862 366
- EP-A1- 3 061 663
- DE-C1- 19 528 610
- DE-U1- 202018 004 330
- US-A1- 2019 016 394
- US-A1- 2019 030 605

## Beschreibung

Die Erfindung betrifft ein Wagenkastenelement für den Wagenkasten eines Schienenfahrzeuges, mit einer Stützstruktur und wenigstens einem Hüllelement, sowie einen Wagenkasten und ein Verfahren zur Herstellung eines Wagenkastenelementes.

Der Wagenkasten eines Schienenfahrzeuges bildet die tragende Struktur zur Befestigung sämtlicher Komponenten des Fahrzeuges und zugleich die Außenhülle des Passagierraumes. Wagenkästen werden üblicherweise aus Stahl oder Aluminium hergestellt. Bei der Erstellung von Wagenkästen aus Stahl werden tragende Strukturen erstellt, z.B. durch Nieten oder Schweißen. Die tragenden Strukturen werden von Längsträgern, Querträgern und Säulen gebildet. Die tragenden Strukturen bestehen üblicherweise aus Halbzeugen, wie zum Beispiel U-, Z-, L- oder T-Profilen. Zur Bildung der Hülle des Wagenkastens werden Hüllelemente auf die tragende Struktur aufgebracht bzw. die tragende Struktur wird mit Hüllelementen beplankt. Auch die Hüllelemente haben eine aussteifende bzw. eine die tragende Struktur verstärkende Funktion. Die Hüllelemente bestehen zumeist aus Blechen, die mit der tragenden Struktur verschweißt werden. Derartige Wagenkästen sind in der EP 2 555 957 A1 und in der DE 10 2008 048 083 A1 beschrieben.

Um den Wagenkasten mit Fenstern zu versehen, können in die Hülle des Wagenkastens Ausschnitte eingebracht werden, die zum Beispiel der Montage von Fenstern oder Türen dienen. Weil üblicherweise auch die Hülle eines Wagenkastens eine tragende Funktion aufweist, können im Bereich dieser Ausschnitte während des Betriebes des Schienenfahrzeuges erhöhte Kräfte bzw. Spannungen auftreten. So werden unter anderem über die Kupplung sowie über die Drehgestelle des Schienenfahrzeuges, zum Beispiel wenn der Wagen beschleunigt oder abgebremst wird oder in eine Kurve hineinfährt, Biege- und Torsionsmomente in den Wagenkasten eingeleitet, die sich über die Hülle bis zu den Ausschnitten fortsetzen. Diese Belastungen führen in der Wagenkastenwand zu Zug- oder Druckspannungen, die sich vor allem an Ecken der Ausschnitte konzentrieren und diese stauchen oder dehnen können. Um erhöhten Belastungen in der Wagenkastenwand zu begegnen, wird die tragende Struktur im Bereich der erhöhten Belastungen verstärkt, zum Beispiel durch eine Vergrößerung der Blechdicke oder durch zusätzliche Träger oder Rippen.

In der DE 102008048083A1 wird vorgeschlagen, die Hülle des Wagenkastens aus Blechteilen mit unterschiedlichen Dicken zu fertigen. Auf diese Weise können in Bereichen, die einer geringeren Belastung ausgesetzt sind, geringere Blechstärken verwendet und Gewicht und Material eingespart werden.

In der EP 2 555 957 A1 wird eine Wagenkastenwand mit einer Hülle aus Blechen mit unterschiedlichen Eigenschaften beschrieben. Die Bleche grenzen stumpfstoßend aneinander an und sind zur Bildung einer versatzfreien Außenseite über durchgehende Laserschweißnähte miteinander verbunden. An Bereichen der Außenbeblechung, an denen erhöhte Spannungen auftreten, werden zum Beispiel Bleche mit größeren Wandstärken verwendet.

Nachteile der Außenwände bekannter Wagenkästen sind der verhältnismäßig hohe Fertigungsaufwand, der durch das Anfertigen passender Blechteile und die erforderlichen Schweißarbeiten entsteht, sowie das weiterhin hohe Gewicht der Wagenkästen.

Aus der EP 1 862 366 A1 ist eine Seitenwand eines Wagenkastens bekannt, die einen Rahmen, der aus einer Anordnung einer Vielzahl von benachbarten Platten gebildet ist, und eine äußere Haut umfasst, die an dem Rahmen haftet und sich über mindestens zwei benachbarte Platten erstreckt, wobei die Anordnung der Platten und die Haut eine laminierte Einheit bilden. Jede Platte weist Rippen auf, die so angeordnet sind, dass sie die Steifigkeit der Seitenwand des Wagenkastens erhöhen.

Der Erfindung liegt daher die Aufgabe zu Grunde, einen Wagenkasten bereitzustellen, der bei einer hohen Festigkeit ein geringes Gewicht aufweist und einfach zu fertigen ist.

Diese Aufgabe wird erfindungsgemäß mit einem Wagenkastenelement nach Anspruch 1, einem Wagenkasten nach Anspruch 13 sowie ein Verfahren zur Herstellung eines Wagenkastenelementes nach Anspruch 14 gelöst. Gemäß der Erfindung ist vorgesehen, dass die Stützstruktur additiv auf das Hüllelement aufgebracht ist. Indem die Stützstruktur additiv auf das Hüllelement aufgebracht wird, lassen sich nahezu beliebige Geometrien in der Stützstruktur verwirklichen. Die Begriffe "Additive Fertigung" und "3-D-Druck" sind im Folgenden, wie in der Fachwelt üblich, als gleichbedeutende Synonyme zu verstehen.

Das Hüllelement kann bevorzugt Flächen- bzw. plattenförmig ausgestaltet sein. Die Stützstruktur ist mit einem 3-D Druckverfahren auf das Hüllelement aufgedruckt. Insbesondere kann die Stützstruktur somit stoffschlüssig mit dem Hüllelement verbunden sein. Beispielsweise kann das Hüllelement von einer Metalllegierung, insbesondere einer Stahllegierung gebildet sein. Entsprechend kann die Stützstruktur von einer Metalllegierung gebildet sein.

Die Stützstruktur weist vorzugsweise wenigstens ein Stützstrukturprofil auf. Das Stützstrukturprofil kann mit einem veränderlichen Profilquerschnitt versehen sein. Der Profilquerschnitt kann an die jeweils lokal auftretenden Belastungen angepasst sein, um ein bestmögliches Verhältnis zwischen Materialaufwand und Festigkeit zu erreichen.

In einer bevorzugten Variante der Erfindung weist die Stützstruktur bzw. das Stützstrukturprofil wenigstens einen Gurt und wenigstens einen zwischen Gurt und Hüllelement angeordneten Steg auf. Der Steg bildet eine kraftübertragende Verbindung zwischen Gurt und Hüllelement. Während der Gurt bevorzugt einen Großteil der auf den Wagenkasten wirkenden Lasten trägt bzw. einen Großteil des bei Belastungen des Wagenkastens entstehenden Kraftflusses leitet, wird ein Teil der auf den Gurt wirkenden Lasten über den Steg auf das Hüllelement übertragen, das somit eine stützende Funktion innehat.

In einer vorteilhaften Ausgestaltung der Erfindung sind der wenigstens eine Gurt und der wenigstens eine Steg mittels additiver Fertigung auf das Hüllelement aufgebracht. Somit kann in einem Arbeitsschritt zunächst der Steg auf das Hüllelement aufgebracht, d. h. "aufgedruckt" werden, und unmittelbar im Anschluss der Gurt auf den Steg gefertigt werden.

Der wenigstens eine Steg der Stützstruktur weist bevorzugt eine Breite von nicht mehr als 2 mm, vorzugsweise von nicht mehr als 1,5 mm, äußerst vorzugsweise von nicht mehr als - 1 mm auf. Die Breite und Höhe des Steges kann dabei entlang der Längserstreckung des Steges variieren. Der Steg kann Hohlräume und/oder Ausschnitte aufweisen, wobei angrenzend an die Hohlräume und/oder Ausschnitte die Breite verringert ist.

Der wenigstens eine Gurt der Stützstruktur weist bevorzugt eine Breite auf, die ein vielfaches der Breite des Steges beträgt. Insbesondere kann der Gurt eine Breite von etwa 3 mm aufweisen.

Idealerweise sind der wenigstens eine Gurt und der wenigstens eine Steg einteilig gefertigt. Dabei können Gurt und Steg bevorzugt aus einem homogenen Material gefertigt sein. Der Gurt und der Steg können in einem Arbeitsgang additiv gefertigt sein. Gefügeveränderungen zwischen Gurt und Steg, die zu einer Verringerung der Festigkeit führen können, werden auf diese Weise vermieden.

Um einen optimalen Kraftverlauf in dem Steg und in dem Hüllelement bzw. eine optimale Kraftübertragung zwischen Steg und Hüllelement zu erreichen, kann der Gurt gemeinsam mit dem Steg Querschnitte wie z.B. ein Haus-, HY- oder I-förmiges Profil bilden. In einer weiteren bevorzugten Variante kann der Gut ein offenes und/oder geschlossenes Hohlprofil bilden. Die Querschnitte können variabel ausgestaltet sein.

Der Steg kann gemäß einer zweckmäßigen Weiterbildung der Erfindung an das Hüllelement angrenzende Öffnungen aufweisen. Die Öffnungen können Durchbrüche bzw. Hohlräume zwischen Steg und Hüllelement bilden. Die Öffnungen können alternativ als Unterbrechung des Steges ausgestaltet sein.

Durch die Öffnungen wird der Wärmeeintrag und damit der Verzug des Hüllelementes während des Aufbringens des Steges und des Gurtes verringert. Des Weiteren bieten die Öffnungen eine einfache Möglichkeit einer Drainage, so dass zum Beispiel durch Kondensation auftretendes Wasser abfließen kann und die Wahrscheinlichkeit einer Korrosion verringert wird. Der Abstand zwischen zwei Öffnungen beträgt z.B. 30 mm, vergleichbar mit einer geschweißten Schrittnaht.

In einer weiteren vorteilhaften Ausgestaltung der Erfindung verlaufen der Gurt und der Steg im Wesentlichen entlang eines in Betrieb des Schienenfahrzeuges auftretenden Lastpfades. Der Wagenkasten eines Schienenfahrzeuges wird während des Betriebes des Schienenfahrzeuges mit Lasten beaufschlagt, die sich in der Wand des Wagenkastens entlang von Lastpfaden konzentrieren. Diese Lastpfade können beispielsweise mittels einer computerunterstützten Berechnung oder Simulation ermittelt werden, insbesondere mit Hilfe der Finite-Elemente-Methode. Wird nun der Verlauf der Stützstruktur an den Verlauf der ermittelten Lastpfade angeglichen, kann bei gleichzeitig geringerem Gewicht eine erhöhte Steifigkeit des Wagenkastens erreicht werden.

Idealerweise deckt die Stützstruktur einen Großteil möglicher, auf den Wagenkasten wirkender Lastpfade ab. Die Stützstruktur kann dazu eine Vielzahl von Stegen und Gurten aufweisen, die gemeinsam auf das Hüllelement mittels additiver Fertigung aufgebracht sind. Die Stege und Gurte eines Wagenkastenelementes können ineinander übergehen. Um das Wagenkastenelement kraftübertragend mit einem benachbarten Wagenkastenelement oder anderen tragenden Strukturen eines Wagenkastens verbinden zu können, können die Gurte bis an den Rand eines Wagenkastenelementes verlaufen. Am Rand des Wagenkastenelementes können die Gurte Befestigungs- und/oder Kraftübertragungsschnittstellen bilden. Die Befestigungs- und/oder Kraftübertragungsschnittstellen können beispielsweise von Kontaktflächen gebildet sein, die im montierten Zustand des Wagenkastens auf Kontaktflächen benachbarter Elemente des Wagenkastens aufliegen oder mit diesen verschweißt werden.

Die Stützstruktur kann bevorzugt über ihre Länge bzw. seine Breite eine inhomogene Materialverteilung aufweisen, um auftretenden Lasten gerecht zu werden. Das Material und/oder die Masse der Stützstruktur kann an Stellen konzentriert sein, an welchen im Betrieb erhöhte Lasten auftreten.

Wenigstens ein Steg und/oder Gurt der Stützstruktur kann einen bogenförmigen Verlauf aufweisen. Zusätzlich kann der wenigstens eine Steg und/oder Gurt wenigstens einen geradlinig verlaufenden Abschnitt aufweisen.

Die Stützstruktur bedeckt gemäß einer bevorzugten Variante der Erfindung nur einen Bruchteil der Innenfläche des Hüllmoduls. Vorzugsweise bedeckt die Stützstruktur weniger als 30 % der Innenfläche des Hüllmoduls, oder weniger als 20 % der Innenfläche, äußerst vorzugsweise weniger als 10 % der Innenfläche des Hüllmoduls. Auf diese Weise kann mehr Raum für Ausschnitte und/oder Installationen geschaffen werden.

Für eine optimale Kraftübertragung und Steifigkeit des Wagenkastenelementes kann die Höhe und/oder Breite des Gurtes und/oder Steges entlang der Längserstreckung der Stützstruktur variieren. Somit kann der Verlauf des Steges entsprechend dem Verlauf der Lastpfade optimiert bzw. an diesen angeglichen werden, so dass eine möglichst direkte Kraftleitung durch den Steg ermöglicht ist. Idealerweise folgt der wenigstens eine Gurt einem Lastpfad, entlang welchem sich im Betrieb des Schienenfahrzeuges der Kraftfluss konzentriert.

Das Wagenkastenelement weist gemäß einer weiteren Variante der Erfindung einen Ausschnitt auf. Der Ausschnitt kann zum Einbau eines Fensters oder einer Tür vorgesehen sein. Der Ausschnitt kann im Wesentlichen rechteckig gestaltet sein. Die Stützstruktur oder der wenigstens eine Steg grenzt idealerweise an die Ecken des rechteckigen Ausschnittes an. Auf diese Weise werden die Lasten, die sich im Betrieb auf die Ecken des Ausschnittes konzentrieren, durch den Steg abgeleitet.

Der Ausschnitt ist vorzugsweise randseitig von einem Rahmenprofil begrenzt. Das Rahmenprofil kann einen Tür- oder Fensterrahmen bilden. Auf den Ausschnitt über die Hülle des Wagenkastens wirkende Kräfte können durch das Rahmenprofil aufgenommen und abgeleitet werden. Idealerweise grenzt dazu die Stützstruktur, insbesondere der wenigstens eine Gurt, an das Rahmenprofil an. Das Rahmenprofil grenzt also bevorzugt wenigstens abschnittsweise kraftübertragend an das Stützprofil und insbesondere den wenigstens einen Gurt an und/oder der Gurt ist kraftübertragend mit dem Rahmenprofil verbunden.

Das erfindungsgemäße Wagenkastenelement bildet in einer weiteren zweckmäßigen Ausgestaltung der Erfindung ein Wagenkastenmodul mit standardisierten Schnittstellen. Die Schnittstellen des Wagenkastenmoduls können zur Übertragung von Kräften von einem oder von mehreren Gurten und/oder Stegen und/oder Hüllelementen gebildet sein. Zum Aufbau eines Wagenkastens werden die Wagenkastenelemente bevorzugt an ihren Schnittstellen miteinander verschweißt.

Ein erfindungsgemäßer Wagenkasten weist wenigstens ein Wagenkastenelement mit den oben beschriebenen Merkmalen auf. Entsprechende Wagenkastenelemente können Seitenwände, Endwände, Dächer und Böden bilden.

Gemäß einem erfindungsgemäßen Verfahren zur Herstellung eines Wagenkastens für ein Schienenfahrzeug sind die folgenden Schritte vorgesehen:

Zunächst wird ein Hüllelement bereitgestellt. Anschließend wird wenigstens ein Steg auf das Hüllelement aufgebracht. Das Aufbringen des Steges erfolgt bevorzugt durch additive Fertigung. Idealerweise wird der Steg stoffschlüssig mit dem Hüllelement verbunden. Dazu kann für den Steg ein Material verwendet werden, dass dem Material des Hüllelementes gleicht oder entspricht.

Der Steg kann mit Öffnungen gefertigt werden, indem auf voneinander beabstandeten Flächen des Hüllelementes mit der Fertigung des Steges begonnen wird. Anschließend kann ein die Öffnungen überbrückender Gurt auf dem Steg gefertigt werden.

Im Anschluss an die Fertigung des Steges erfolgt die Fertigung des wenigstens einen Gurtes. Der Gurt wird auf die Stege aufgebracht, beabstandet von dem Hüllelement.

Um eine optimale Lastenverteilung auf dem Hüllelement zu erreichen, kann eine Vielzahl von Gurten und Stegen gleichzeitig durch additive Fertigung auf dem Hüllelement aufgebracht werden.

Die additive Fertigung des Steges und/oder des Gurtes erfolgt bevorzugt durch Laser-Pulver-Auftragsschweißen oder Laser-Schweißdraht-Auftragsschweißen.

Für eine optimale Lastenverteilung auf dem Hüllelement kann in einer weiteren Variante des erfindungsgemäßen Verfahrens zunächst eine Berechnung der Lastpfade auf einem vordefinierten Hüllelement erfolgen. Idealerweise kann eine computerunterstützte Topologieoptimierung erfolgen, wobei anschließend der Verlauf der Gurte und Stege entsprechend der ermittelten optimalen Topologie gestaltet wird. Es wird zunächst eine computerunterstützte Topologieoptimierung durchgeführt. Anschließend werden die Gurte und Stege mit einem Verlauf gefertigt, der im Wesentlichen der durch die Topologieoptimierung ermittelten optimalen Formgebung entspricht.

Weil bei einer additiven Fertigung der Gurte und Stege auch veränderliche Querschnitte und bogenförmige Verläufe möglich sind, kann die Geometrie der Gurte und Stege entsprechend der ermittelten Lastpfade veränderlich gestaltet werden. Entsprechend wird gemäß einem weiteren bevorzugten Verfahrensschritt die Form des Querschnittes, die Höhe, die Breite und/oder die Länge der Gurte und Stege entsprechend der Ergebnisse einer zuvor berechneten Topologieoptimierung gewählt.

In einem erfindungsgemäßen Verfahren zur Topologieoptimierung wird die Grundgestalt der Stützstruktur computerunterstützt entworfen. Bevorzugt wird die Topologie (Grundgestalt) mittels der Finite-Elemente-Methode (FEM) computerunterstützt bestimmt. Der Bauraum für die Stützstruktur wird einerseits durch das Hüllelement nach außen und andererseits durch den maximal zur Verfügung stehenden Bauraum für die Stützstruktur bzw. den Passagier-Innenraum nach innen definiert. Insbesondere wird der für die Definition der Stützstruktur definierte Bauraum durch das Hüllelement begrenzt. Die Geometrie des Hüllelementes wird bevorzugt vor Beginn der Topologieoptimierung definiert, wobei der Bauraum der Stützstruktur einseitig an dem Hüllelement beginnt.

Die in Richtung eines Endes des Wagenkastenelementes verlaufenden Gurte und Stege grenzen bevorzugt an das Ende des Hüllelementes an. Die Enden der Gurte und Stege können kraftübertragende Anschlussschnittstellen für den Einbau des Wagenkastenelementes in einen Wagenkasten bilden. Die Anschlussschnittstellen liegen somit auf den Lastpfaden. Indem zwei Wagenkastenelemente an den Anschlussschnittstellen miteinander verbindbar sind, z.B. durch Schweißen, kann über benachbarte Stützstrukturmodule ein durchgängiger Kraftfluss erreicht werden. Die Stützstrukturmodule zweier benachbarter Wagenkastenelemente können die auf die Wagenkastenelemente wirkenden Lasten idealerweise im Wesentlichen vollständig ableiten.

Die Anschlussschnittstellen können beispielsweise von Schweißflächen gebildet sein, an welchen aneinander angrenzende Stützstrukturmodule miteinander verschweißbar und/oder tragende Profile anschließbar sind.

Der Gurt und/oder der Steg ist im Bereich der Anschlussschnittstelle bevorzugt verbreitert, um eine hohe Kraftübertragung bei geringer Spannung zu ermöglichen.

Das Wagenkastenelement wird gemäß einer weiteren Variante des Verfahrens mit einem Ausschnitt entworfen. Der Ausschnitt kann zum Einbau eines Fensters oder einer Tür vorgesehen sein. Der Ausschnitt wird bevorzugt von einem Rahmenprofil umgeben. Der für die Definition der Stützstruktur definierte Bauraum wird anschließend idealerweise wenigstens abschnittsweise durch das Rahmenprofil begrenzt. Dabei kann der Bauraum das Rahmenprofil umgeben. Die Geometrie des Rahmenprofils wird dazu bevorzugt vor Beginn der Topologieoptimierung definiert. Der Bauraum der Stützstruktur beginnt bevorzugt an dem Rahmenprofil. Entsprechend kann die Stützstruktur an dem Rahmenprofil beginnen.

Durch das topologieoptimierte Design und die entsprechende additive Fertigung der Stützstruktur können die Bauteilkosten eines erfindungsgemäßen Wagenkastenelementes um etwa 40 % reduziert werden. Des Weiteren ist eine Gewichtseinsparung von etwa 15 % bezogen auf die additiv gefertigte Struktur möglich.

Die beiliegenden Zeichnungen veranschaulichen erfindungsgemäße Ausführungsformen und dienen zusammen mit der Beschreibung der Erläuterung der Prinzipien der Erfindung. Es zeigen:
Fig. 1 eine Ausführungsform eines erfindungsgemäßen Wagenkastenelementes für einen Wagenkasten eines Schienenfahrzeuges;
Fig. 2 einen vergrößerten Ausschnitt der Ausführungsform der Fig. 1;
Fig. 3 einen weiteren vergrößerten Ausschnitt der Ausführungsform der Fig. 1.

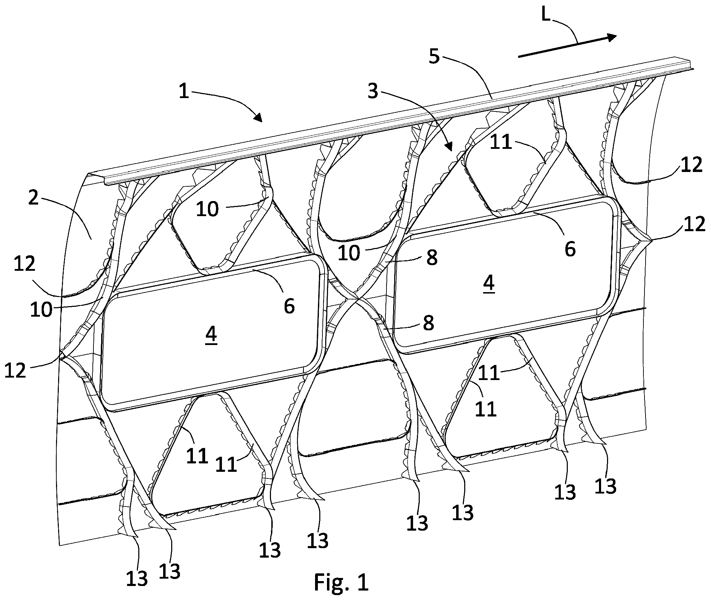

Im Folgenden wird unter Bezugnahme auf die Figuren 1 bis 3 ein bevorzugtes Ausführungsbeispiel eines erfindungsgemäßen Wagenkastenelementes beschrieben.

Figur 1 zeigt ein erfindungsgemäßes Wagenkastenelement 1. Das Wagenkastenelement 1 weist ein Hüllelement 2 auf, das mit einer Stützstruktur 3 versehen ist. In dem Wagenkastenelement 1 sind zwei Ausschnitte 4 eingebracht, die dem Einbau von Fenstern dienen.

Das Hüllelement 2 ist im Wesentlichen aus flächen- oder plattenförmigen Blechen gefertigt. Das Hüllelement 2 bildet die Außenfläche des Wagenkastens bzw. Schienenfahrzeuges und sorgt im Wesentlichen für die räumliche Trennung zwischen Innenraum und Umwelt. Für eine optimale Gestaltung des Innenraums ist das Hüllelement 2 zur Außenseite hin gewölbt. Die Stützstruktur 3 ist also auf einer konkav gewölbten Fläche des Hüllelementes 2 aufgebracht. Die Stützstruktur 3 ist über additive Fertigung auf die Innenfläche des Hüllelementes 2 aufgebracht und stoffschlüssig mit diesem verbunden.

An seinem oberen Ende umfasst das Hüllelement 2 ein in Längsrichtung L verlaufendes Längsprofil 5, das das Wagenkastenelement 1 verstärkt und einen Übergang zum hier nicht gezeigten Dach des Wagenkastens bildet. Die Stützstruktur 3 erstreckt sich bis auf das Längsprofil 5 und ist auch an dem Längsprofil 5 additiv aufgebracht. Die Ausschnitte 4 sind von Rahmenprofilen 6 umgeben. Die Rahmenprofile 6 stützen die Ausschnitte 4 an ihren Rändern. Die Rahmenprofile 6 bilden Fensterrahmen zur Aufnahme von Fensterdichtungen und -scheiben. Die Rahmenprofile 6 werden wiederum von der Stützstruktur 3 gestützt. Dazu grenzt die Stützstruktur 3 an die Rahmenprofile 6 an.

Die Stege 7 und/oder Gurte 8 können einen bogenförmigen Verlauf aufweisen, der im Wesentlichen dem bogenförmigen Verlauf eines im Betrieb auftretenden Lastpfades entspricht. In dem Ausführungsbeispiel der Fig. 1 sind bogenförmige Gurtabschnitte 10 vorgesehen, die eine optimierte Kraftleitung ermöglichen. Des Weiteren sind geradlinig verlaufende Gurtabschnitte 11 vorhanden. Die Mehrzahl der geradlinigen Gurtabschnitte 11 verläuft im Wesentlichen schräg zur Längsrichtung L. Damit dienen die geradlinigen Gurtabschnitte 11 insbesondere dazu, die Verwindungssteifigkeit des Wagenkastens zu erhöhen.

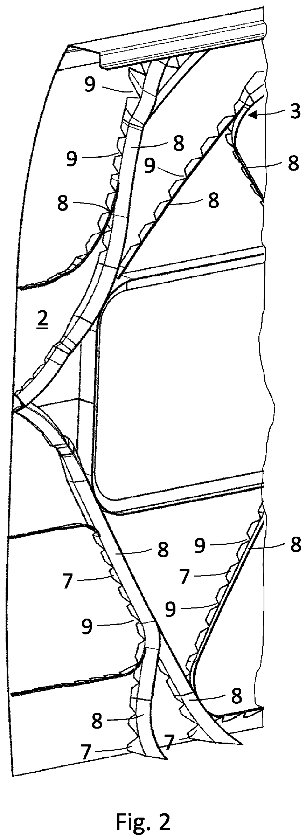

Fig. 2 ist ein vergrößerter Ausschnitt des linken Endes des Wagenkastenelementes der Fig. 1. Die Stützstruktur 3 umfasst Stege 7 und Gurte 8. Die Stege 7 sind unmittelbar auf das Hüllelement 2 aufgebracht. Die Stege 7 weisen Öffnungen 9 auf, an welchen keine Verbindung zwischen Hüllelement 2 und Steg 7 besteht.

Zwischen zwei Öffnungen 9 verlaufende Abschnitte des Steges 7 weisen ein im Wesentlichen trapezförmiges Profil auf, wobei eine lange Seite des Trapezes an den Gurt 8 angrenzt, während eine im Wesentlichen parallel zur langen Seite verlaufende kurze Seite des Trapezes an das Hüllelement 2 angrenzt. Durch das trapezförmige Profil der Stegabschnitte wird eine hohe Festigkeit der Gurte 8 erreicht, ohne dass bei der additiven Fertigung der Stützstruktur 3 ein zu großer Hitzeeintrag in das Hüllelement 2 entsteht. Des Weiteren sind die Öffnungen groß genug, um einen Ablauf von Wasser zu ermöglichen und somit Korrosion zu verhindern.

Die in Richtung des linksseitigen Endes des Wagenkastenelementes 1 verlaufenden Gurte 8 und Stege 7 grenzen an das Ende des Hüllelementes 2 an. Damit bilden die Enden der Gurte 8 und Stege 7 kraftübertragende Anschlussschnittstellen 12 für die Verbindung mit benachbarten Wagenkastenelementen 1.

Auch im Bodenbereich grenzen die Gurte 8 und Stege 7 an das Ende des Hüllelementes 2 an, wobei hier kraftübertragende Anschlussschnittstellen 13 zur Verbindung mit dem Wagenkastenboden vorgesehen sind.

Die Anschlussschnittstellen 12, 13 sind von den Gurten 8 und/oder Stegen 7 gebildet und liegen idealerweise auf den Lastpfaden bzw. zentrisch zu den Lastpfaden. Beim Einbau des Wagenkastenelementes 1 in einen Wagenkasten ist somit gewährleistet, dass eine nahtlose Einbindung der Stützstruktur 3 in den Kraftfluss des Wagenkastens erfolgt und auf den Wagenkasten wirkende Lasten von einem Wagenkastenelement 1 in benachbarte Wagenkastenelemente 1 übertragen werden.

Das Wagenkastenelement 1 weist somit vordefinierte Schnittstellen auf, die eine Verwendung im Sinne eines Wagenkastenmoduls ermöglichen. Wagenkastenelemente 1 können beispielsweise als Gleichteile vorgefertigt werden, um einen Wagenkasten effizient herzustellen.

Aneinander angefügte Wagenkastenelemente 1 bilden an ihren Anschlussschnittstellen 12 einen kreuzförmigen Verlauf der Gurte 8, entsprechend dem mittig in Fig. 1 dargestellten Verlauf der Gurte 8. Damit ergibt sich durch das Hintereinanderfügen mehrerer Wagenkastenelemente 1 eine gleichförmige Verteilung der Stützstruktur 3.

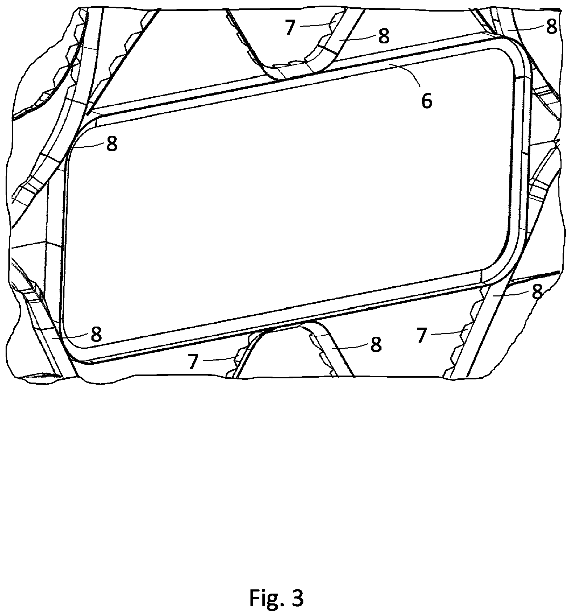

Fig. 3 zeigt einen vergrößerten Ausschnitt des Wagenkastenelements 1 mit einem Ausschnitt 4. Die Rahmenprofile 6 bilden Fensterrahmen zur Aufnahme von Fensterdichtungen und Fensterscheiben. Die Rahmenprofile 6 bilden einen Bestandteil der Stützstruktur 3. Die Rahmenprofile 6 sind bevorzugt aus Halbzeugen gefertigt, und mit dem Hüllelement 2 verschweißt, um eine möglichst genau fertigbare Schnittstelle für einzubauende Fenster zu erreichen.

Die Rahmenprofile 6 werden wiederum von der Stützstruktur 3 gestützt. Dazu grenzt die Stützstruktur 3 an die Rahmenprofile 6 an. Insbesondere die Gurte 8 grenzen an das Rahmenprofil 6 an und stützen dieses gegen äußere und innere Belastungen.

### Bezugszeichenliste

- 1: Wagenkastenelement
- 2: Hüllelement
- 3: Stützstruktur
- 4: Ausschnitt
- 5: Längsprofil
- 6: Rahmenprofil
- 7: Steg
- 8: Gurt
- 9: Öffnung
- 10: Bogenförmiger Gurtabschnitt
- 11: Geradliniger Gurtabschnitt
- 12: Anschlussschnittstelle (Seite)
- 13: Anschlussschnittstelle (Boden)

## Patentansprüche

1. Wagenkastenelement (1) für den Wagenkasten eines Schienenfahrzeuges, mit einer Stützstruktur (3) und wenigstens einem Hüllelement (2), wobei die Stützstruktur (3) mit einem 3-D Druckverfahren auf das Hüllelement (2) aufgedruckt ist.

2. Wagenkastenelement (1) nach Anspruch 1, wobei die Stützstruktur (3) wenigstens einen Gurt (8) und wenigstens einen zwischen Gurt (8) und Hüllelement (2) angeordneten Steg (7) umfasst.

3. Wagenkastenelement (1) nach Anspruch 2, wobei der wenigstens eine Gurt (8) und der wenigstens eine Steg (7) mittels additiver Fertigung auf das Hüllelement (2) aufgebracht sind.

4. Wagenkastenelement (1) nach Anspruch 2 oder 3, wobei der wenigstens eine Gurt (8) und der wenigstens eine Steg (7) einteilig gefertigt sind.

5. Wagenkastenelement (1) nach einem der Ansprüche 2 bis 4, wobei der Gurt (8) gemeinsam mit dem Steg (7) ein Haus-, HY- oder I-förmiges Profil bildet.

6. Wagenkastenelement (1) nach einem der Ansprüche 2 bis 5, wobei der Steg (7) an das Hüllelement (2) angrenzende Öffnungen (9) aufweist.

7. Wagenkastenelement (1) nach einem der Ansprüche 2 bis 6, wobei der Gurt (8) und der Steg (7) im Wesentlichen entlang eines im Betrieb des Schienenfahrzeuges auftretenden Lastpfades verlaufen.

8. Wagenkastenelement (1) nach einem der obigen Ansprüche, wobei die Stützstruktur (3) einen Großteil möglicher, auf den Wagenkasten wirkender Lastpfade abdeckt.

9. Wagenkastenelement (1) nach einem der Ansprüche 2 bis 8, wobei die Höhe und/oder Breite des Gurtes (8) und/oder Steges (7) entlang der Längserstreckung der Stützstruktur (3) variieren.

10. Wagenkastenelement (1) nach einem der Ansprüche 2 bis 9, wobei der wenigstens eine Gurt (8) einem Lastpfad folgt, entlang welchem sich im Betrieb des Schienenfahrzeuges der Kraftfluss konzentriert.

11. Wagenkastenelement (1) nach einem der Ansprüche 2 bis 9, wobei das Wagenkastenelement (1) einen Ausschnitt (4) aufweist.

12. Wagenkastenelement (1) nach Anspruch 11, wobei der Ausschnitt (4) randseitig von einem Rahmenprofil (6) begrenzt wird, wobei das Rahmenprofil (6) wenigstens abschnittsweise kraftübertragend an die Stützstruktur (3) angrenzt und/oder kraftübertragend mit der Stützstruktur (3) verbunden ist.

13. Wagenkasten für ein Schienenfahrzeug, **gekennzeichnet durch** ein Wagenkastenelement (1) nach einem der Ansprüche 1 bis 12.

14. Verfahren zur Herstellung eines Wagenkastenelementes nach einem der Ansprüche 1 bis 12, **gekennzeichnet durch** die Schritte:
a. Bereitstellen eines Hüllelementes (2),
b. anschließend additive Fertigung eines Steges (7) auf dem Hüllelement (2),
c. anschließend additives Aufbringen eines den Steg (7) überbrückenden Gurtes (8).

15. Verfahren nach Anspruch 14, **gekennzeichnet durch** die zusätzlichen Schritte:
a. Durchführung einer computerunterstützten Topologieoptimierung, wobei der Bauraum durch das Hüllelement definiert ist,
b. anschließend Fertigung des wenigstens einen Gurtes (8) und Steges (7) mit einem Verlauf, der im Wesentlichen der durch die Topologieoptimierung ermittelten optimalen Formgebung entspricht.

## Claims

1. Car body element (1) for the car body of a rail vehicle, having a support structure (3) and at least one cover element (2), the support structure (3) being printed onto the cover element (2) using a 3D printing process.

2. Car body element (1) according to claim 1, wherein the support structure (3) comprises at least one beam (8) and at least one bar (7) arranged between the beam (8) and the cover element (2).

3. Car body element (1) according to claim 2, wherein the at least one beam (8) and the at least one bar (7) are applied to the cover element (2) by means of additive manufacturing.

4. Car body element (1) according to claim 2 or 3, wherein the at least one beam (8) and the at least one bar (7) are manufactured in one piece.

5. Car body element (1) according to any one of claims 2 to 4, wherein the beam (8) together with the bar (7) forms a house-shaped, HY-shaped or I-shaped profile.

6. Car body element (1) according to any one of claims 2 to 5, wherein the bar (7) has openings (9) adjacent to the cover element (2).

7. The car body element (1) according to any one of claims 2 to 6, wherein the beam (8) and the bar (7) extend substantially along a load path occurring during operation of the rail vehicle.

8. Car body element (1) according to one of the preceding claims, wherein the support structure (3) covers a majority of possible load paths acting on the car body.

9. Car body element (1) according to any one of claims 2 to 8, wherein the height and/or width of the beam (8) and/or bar (7) vary along the longitudinal extension of the support structure (3).

10. Car body element (1) according to one of claims 2 to 9, wherein the at least one beam (8) follows a load path along which the flow of force is concentrated during operation of the rail vehicle.

11. Car body element (1) according to any one of claims 2 to 9, wherein the car body element (1) comprises a cut-out (4).

12. Car body element (1) according to claim 11, wherein the cut-out (4) is bounded at the edge by a frame profile (6), wherein the frame profile (6) adjoins the support structure (3) in a force-transmitting manner at least in sections and/or is connected to the support structure (3) in a force-transmitting manner.

13. Car body for a rail vehicle, **characterised by** a car body element (1) according to one of claims 1 to 12.

14. A method of manufacturing a car body element according to any one of claims 1 to 12, **characterised by** the steps of:
a. providing a cover element (2),
b. subsequently additively manufacturing a bar (7) on the cover element (2),
c. subsequently additively attaching a beam (8) bridging the bar (7).

15. The method according to claim 14, **characterised by** the additional steps of:
a. performing a computer-aided topology optimisation, wherein the installation space is defined by the cover element,
b. subsequently manufacturing the at least one beam (8) and bar (7) with a shape which essentially corresponds to the optimum shape determined by the topology optimisation.

## Revendications

1. Élément de caisse de voiture (1) pour la caisse de voiture d'un véhicule ferroviaire, comportant une structure de support (3) et au moins un élément d'enveloppe (2), dans lequel la structure de support (3) est imprimée sur l'élément d'enveloppe (2) au moyen d'un procédé d'impression 3D.

2. Élément de caisse de voiture (1) selon la revendication 1, dans lequel la structure de support (3) comprend au moins une sangle (8) et au moins une entretoise (7) disposée entre la sangle (8) et l'élément d'enveloppe (2).

3. Élément de caisse de voiture (1) selon la revendication 2, dans lequel l'au moins une sangle (8) et l'au moins une entretoise (7) sont appliquées sur l'élément d'enveloppe (2) au moyen d'une fabrication additive.

4. Élément de caisse de voiture (1) selon la revendication 2 ou 3, dans lequel l'au moins une sangle (8) et l'au moins une entretoise (7) sont fabriquées d'une seule pièce.

5. Élément de caisse de voiture (1) selon l'une des revendications 2 à 4, dans lequel la sangle (8) forme, conjointement avec l'entretoise (7), un profil en forme de maison, de HY ou de I.

6. Élément de caisse de voiture (1) selon l'une des revendications 2 à 5, dans lequel l'entretoise (7) présente des ouvertures (9) adjacentes à l'élément d'enveloppe (2).

7. Élément de caisse de voiture (1) selon l'une des revendications 2 à 6, dans lequel la sangle (8) et l'entretoise (7) s'étendent sensiblement le long d'une ligne de charge se produisant lors du fonctionnement du véhicule ferroviaire.

8. Élément de caisse de voiture (1) selon l'une des revendications précédentes, dans lequel la structure de support (3) couvre une grande partie des lignes de charge possibles agissant sur la caisse de voiture.

9. Élément de caisse de voiture (1) selon l'une des revendications 2 à 8, dans lequel la hauteur et/ou la largeur de la sangle (8) et/ou de l'entretoise (7) varient le long de l'extension longitudinale de la structure de support (3).

10. Élément de caisse de voiture (1) selon l'une des revendications 2 à 9, dans lequel l'au moins une sangle (8) suit une ligne de charge le long de laquelle se concentre le flux de forces lors du fonctionnement du véhicule ferroviaire.

11. Élément de caisse de voiture (1) selon l'une des revendications 2 à 9, dans lequel l'élément de caisse de voiture (1) présente une découpe (4).

12. Élément de caisse de voiture (1) selon la revendication 11, dans lequel la découpe (4) est délimitée côté bord par un profilé formant cadre (6), dans lequel le profilé formant cadre (6) est adjacent à la structure de support (3) au moins dans certaines sections de manière à transmettre une force et/ou est relié à la structure de support (3) de manière à transmettre une force.

13. Caisse de voiture pour un véhicule ferroviaire, **caractérisée par** un élément de caisse de voiture (1) selon l'une des revendications 1 à 12.

14. Procédé pour la fabrication d'un élément de caisse de voiture selon l'une des revendications 1 à 12, **caractérisé par** les étapes consistant à :
a. fournir un élément d'enveloppe (2),
b. ensuite, fabriquer de manière additive une entretoise (7) sur l'élément d'enveloppe (2),
c. ensuite, appliquer de manière additive une sangle (8) recouvrant l'entretoise (7).

15. Procédé selon la revendication 14, **caractérisé par** les étapes supplémentaires consistant à :
a. réaliser une optimisation topologique assistée par ordinateur, dans lequel l'espace de construction est défini par l'élément d'enveloppe,
b. ensuite, fabriquer les au moins une sangle (8) et entretoise (7) avec un tracé qui correspond sensiblement à la forme optimale déterminée par l'optimisation topologique.
